(19) Europäisches Patentamt / European Patent Office / Office européen des brevets

(11) **EP 3 735 874 A1**

(12) **EUROPEAN PATENT APPLICATION**

(43) Date of publication:
**11.11.2020 Bulletin 2020/46**

(51) Int Cl.:
***A47J 31/44*** *(2006.01)*

(21) Application number: **19172748.6**

(22) Date of filing: **06.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
- **SINNEMA, Anke Gerda**
  **5656 AE Eindhoven (NL)**
- **ZUIDERVAART, Jasper**
  **5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **A MIXING APPARATUS FOR CREATING FROTHED MILK**

(57)    A mixing apparatus is for creating frothed milk, and comprises a container for containing milk, with a milk passage and a steam inlet channel leading to a mixing chamber for mixing milk and steam (and air). A steam separator is in series along the steam inlet channel for reducing the water content of the steam delivered to the mixing chamber.

FIG. 3A

**Description**

FIELD OF THE INVENTION

This invention relates to the field of automatic beverage preparation, and more specifically to the field of automatic frothed milk beverage preparation. It relates in particular to a mixing apparatus for creating frothed milk.

BACKGROUND OF THE INVENTION

Typically, full automatic espresso appliances provide the function of automated cappuccino brewing, in which coffee is brewed, and frothed milk is prepared. In most cases, steam is used for heating and frothing the milk, in a similar manner to a barista. To improve the ease of use of the appliance and provide stable performance to all users regardless of skill, several milk frothing modules have been developed. Normally, these modules are removable from the base appliance, as all parts in contact with milk need to be cleaned.

The milk frothing function typically operates by heating up water in a thermoblock within the coffee machine to generate steam, which then passes to the milk frothing unit. The frothed milk is used for milk recipes generally, and a cappuccino is one example.

There are several issues which can result in the generated steam being more wet than is desirable. For example, water left behind in the thermoblock may influence the heating control so that the water is not fully evaporated to create dry steam.

A problem with the generation of wet steam is that there may be spitting of small water droplets, there may be a slight undesired dilution of the milk and the froth quality may be reduced. A consumer may also be dissatisfied because they see water dripping into the their cup instead of milk.

There is therefore a need for a simple way to ensure the dryness of the steam generated but without excessively complicating the design of the coffee machine or the milk frothing unit.

SUMMARY OF THE INVENTION

The invention is defined by the claims.

According to examples in accordance with an aspect of the invention, there is provided a mixing apparatus for creating frothed milk, comprising:

    a first container for containing milk;
    a mixing chamber for mixing milk, steam and air;
    a steam inlet channel which leads to the mixing chamber;
    a milk passage which leads from the first container to the mixing chamber; and
    a steam separator in series along the steam inlet channel.

This mixing apparatus enables mixing of milk, air and steam in a mixing chamber. A steam inlet channel leading to the mixing chamber is provided with a steam separator. A steam separator is a device for separating water particles from steam, and may thus alternatively be described as a moisture separator or moisture trap. The purpose is that water droplets in the steam can be separated so that the steam delivered to the mixing chamber has reduced water droplet content. This avoids dilution of the milk and prevents visible water droplet delivery. The integration of the steam separator in the mixing apparatus avoids the need for any modification to the apparatus which delivers the steam (e.g. a coffee machine) and so provides a low cost solution to the problem of droplet formation.

In particular, the steam separator function is desirable for the steam delivery to a frothing unit, but it is not needed more generally for the steam output from a coffee machine. For example, other uses of the steam outlet may be for pre-heating, for cleaning purposes etc. for which high quality steam is not needed. By incorporating the steam separator in the mixing apparatus (i.e. the frothing unit) it is easier to design the steam separator to be easily serviced (in particular for removing the collected moisture and for cleaning) without additional effort, and without needing to dismantle the coffee machine itself. For example, a milk frothing unit is cleaned after each use in any case. Good quality frothed milk can be produced even if the steam outlet from a coffee machine is not of high quality (i.e. high dryness).

Because the steam separator will be emptied during each use when the milk frothing unit is cleaned, there is no need for any connection to a drip tray, and no valve arrangement is needed. Thus, the steam separator function does not contribute to filling of a drip tray, and does not therefore necessitate more frequent emptying of a drip tray.

The apparatus preferably further comprises an air passage which leads to the mixing chamber. Thus, there is delivery of steam, air and milk to the mixing chamber, where heating and frothing take place.

The air passage for example comprises an air intake channel which defines an air flow from the air surrounding the mixing apparatus to the mixing chamber. Thus, a separate source of air is not needed. The air intake channel may draw air in from the surrounding environment using a negative pressure caused by the flow to the mixing chamber.

The air intake channel for example imparts a Venturi effect on the air flow. In this way, the ingredients are prevented from leaving the channel through the air intake due to the pressure difference between the channel and the air intake.

The steam separator for example comprises a reservoir for collecting moisture.

For example, the steam separator may comprise an in-line fluid passageway comprising a tortuous path for the steam, with at least one blocking element for blocking a direct path and for directing moisture to the reservoir. This provides one possible implementation of the steam separator, and which may be implemented simply as a defined fluid flow path, requiring no driven components.

The first container for example defines the mixing chamber, and the apparatus further comprises:

a second container, wherein the second container is adapted to receive the first container and wherein the second container comprises a port for connection to the mixing chamber from which mixed milk, steam and air are delivered.

This defines a two-container arrangement. By removing the first container from the second, the first container can be cleaned. This separation of the two containers preferably also allows the milk passage to be cleaned.

For example, the steam inlet channel and the milk passage may be defined by an interface between the first and second containers.

The reservoir of the steam separator is preferably also defined by the interface between the first and second containers. In this way, when cleaning the milk container after use, the reservoir of the steam separator is automatically emptied. This means a very small reservoir is needed. For example, the reservoir of the steam separator may have a volume of less than 10mL.

The apparatus may further comprise:

a seal disposed between the first container and the second container, wherein the seal comprises:

a first sealing member disposed between the mixing chamber and the port; and
a second sealing member for defining one surface of the milk passage and one surface of the reservoir.

In this way, milk is able to be provided to the mixing chamber by way of a milk passage defined at least in part by a seal. In this way, the milk passage may be disassembled for cleaning by simply removing the first container from the second container. This also opens and therefore empties the reservoir of the steam separator.

The seal may further comprise:

a transition seal portion, the transition seal portion comprising:

a seal split; and
an air intake channel.

The seal split allows a flow to enter the mixing chamber and the air intake channel allows air to be drawn in.

The invention also provides a coffee maker, the coffee maker comprising;

a liquid coffee extraction apparatus;
the mixing apparatus as defined above; and
a dispenser adapted to dispense:

liquid coffee from the liquid coffee extraction apparatus; and
frothed milk from the mixing apparatus.

BRIEF DESCRIPTION OF THE DRAWINGS

Examples of the invention will now be described in detail with reference to the accompanying drawings, in which:

Figs. 1A and 1B show two views of a drinks machine;
Figure 2A shows an exploded view of an example mixing apparatus;
Figure 2B shows an assembled view of the mixing apparatus of Figure 2B;
Figure 3A shows a detailed view of the channel arrangement of the mixing apparatus of Figure 2A;
Figure 3B shows the flow of fluid through the channel arrangement of Figure 3A;
Figure 4A shows a first alternative steam separator design;
Figure 4B shows a second alternative steam separator design;
Figure 4C shows a third alternative steam separator design;
Figure 5A shows an example seal;
Figure 5B illustrates the operation of the span seal of Figure 4A;
Figure 6A shows an alternative channel of a mixing apparatus;
Figure 6B shows a cross section of the channel of Figure 5A; and
Figure 7 shows an example transition portion of a seal.

DETAILED DESCRIPTION OF THE EMBODIMENTS

The invention provides a mixing apparatus for creating frothed milk, comprising a container for containing milk, with a milk passage and a steam inlet channel leading to a mixing chamber for mixing milk and steam (and air). A steam separator is in series along the steam inlet channel for reducing the water content of the steam delivered to the mixing chamber.

The mixing apparatus is for example a milk frothing unit for receiving steam delivered to it by an espresso coffee machine.

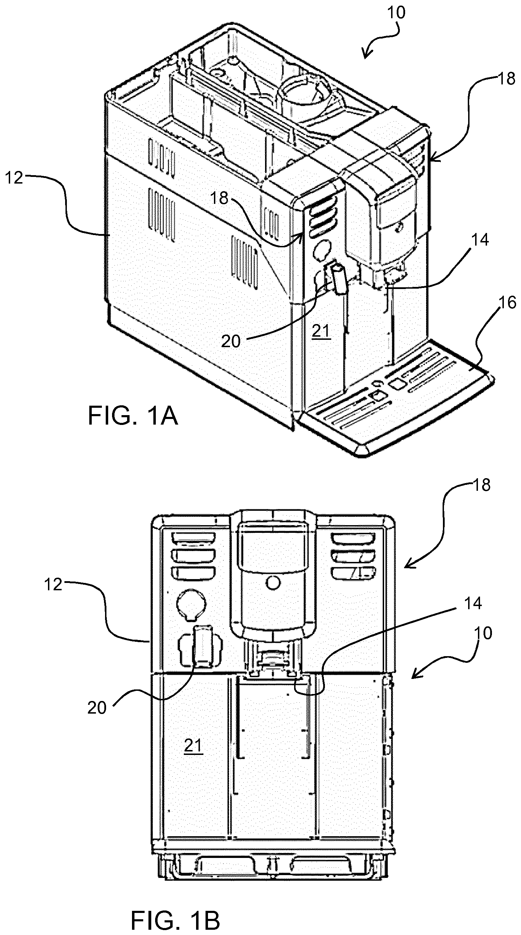

Figs. 1A and 1B show am example of an espresso coffee machine 10. Fig. 1A shows a perspective view and Fig. 1B shows a view from in front. This example is a bean-to-cup machine, although other options are possible as mentioned further below.

It comprises a main body 12 which houses a water reservoir, a water heater and a reservoir for receiving coffee beans. There is an internal grinding mechanism for creating coffee grind, a brewing chamber or brew group for receiving the coffee grind, and a pumping system for pumping heated water through the coffee grind.

The machine comprises a coffee output 14 from which the espresso drink (without milk) is output. The coffee output 14 faces downwardly and is located over a drip tray 16. Figs. 1A and 1B also show a user interface 18 for receiving user selections, such as for water selection and for other drinks selections. At least some of the drinks selections relate to drinks recipes which include frothed milk and therefore require the generation of steam. There may also be an option for the generation of steam without being part of a drink selection, for example to enable the user to generate heated and/or frothed milk independently of any drink to be made by the machine.

The operation of the machine in generating an espresso coffee drink is entirely conventional, and the general operation of the coffee machine will not be described further. Furthermore, the illustrated full function espresso machine is only one example of the type of coffee machine to which the invention may be applied.

An output nozzle 20 is provided for delivering the steam for milk frothing or hot water, depending on user selection at the user interface 18. The steam output may be used for heating and/or frothing milk, and the option of a hot water only output gives additional options to the user, for example for making soup, tea, hot chocolate etc. It is noted that there may be separate nozzles for steam and for hot water.

The output nozzle 20 is located in a docking region 21 for receiving a drinks vessel or a milk frothing unit.

The invention relates to a mixing apparatus, in particular for creating frothed milk. The general concept of the invention is to integrate a steam separator with the mixing apparatus to extract liquid water content from the steam used by the mixing apparatus.

Particular examples will now be described which make use of a two-container design.

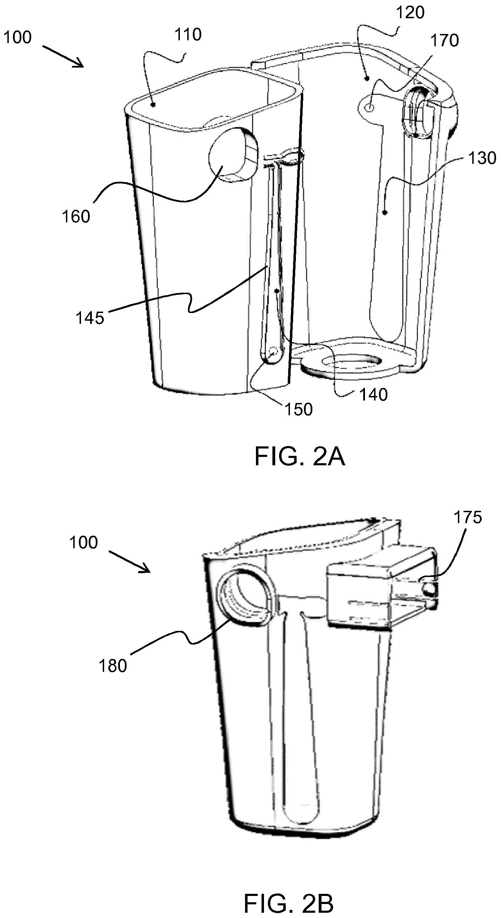

Figure 2A shows a mixing apparatus 100 in accordance with an example of the invention comprising: a first container 110; a second container 120, adapted to receive the first container; and a seal 130 disposed between the first and second containers.

The seal is for example a press fit into a side wall of one of the two containers so that when the two containers are assembled, the seal is sandwiched between them. The mating between the seal and one of the containers forms a closed channel arrangement which defines the fluid paths for mixing a milk inlet and a steam inlet, as well as for implementing a steam separator, and for providing a frothed milk outlet. By separating the two containers all parts can be easily cleaned. There is only one seal element for defining all the channels used for the drying of the steam and the supply and mixing of milk and the dry steam. The seal closes at least a water reservoir of a steam separator so that the collected moisture is released when the containers are separated.

The seal may be 2 shot (2K) molded into the second container, or else it may be a separate seal which is removable from a recess in the second container.

The mixing apparatus further comprises a channel arrangement 140, which is defined by the seal 130 and the first container 110 when the mixing apparatus is assembled. In the example shown in Figure 1, the first container 110 comprises a raised channel portion 145, which further defines the channel arrangement. The channel arrangement connects a first port 150 at the bottom of the channel and a mixing chamber 160 of the first container at the top of the channel. In addition, the second container comprises a second port (not shown) connected to a first seal port 170 of the seal, wherein the channel further connects the first seal port 170 to the first port and the mixing chamber.

Figure 2B shows the mixing apparatus 100 of Figure 2A in an assembled state.

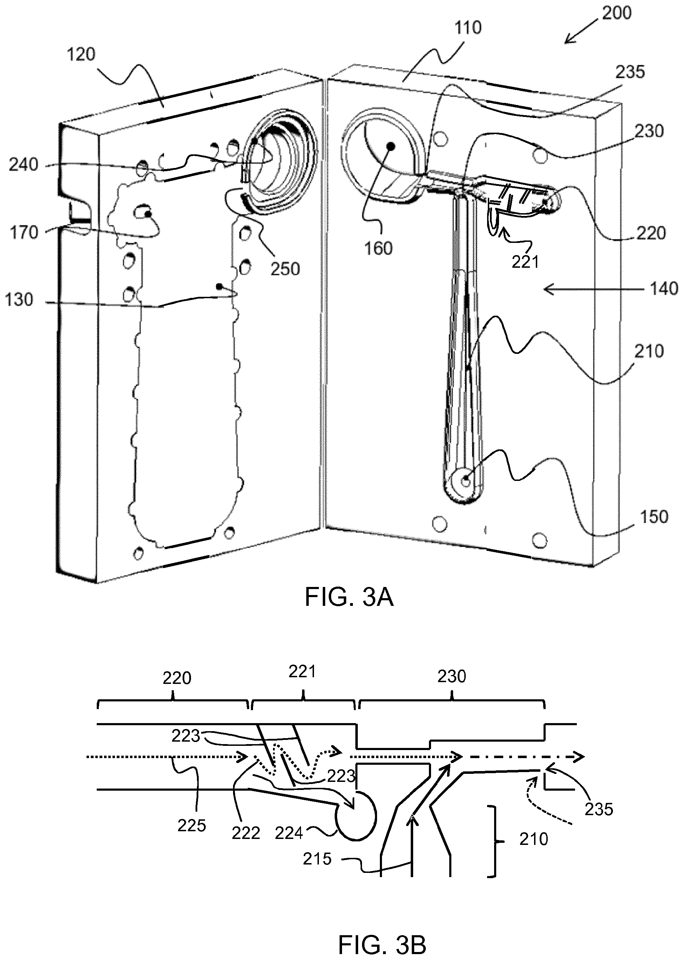

In this Figure, it can be clearly seen that the second container 120 further comprises a second port 175 from which steam is provided to the channel and a third port 180 connected to the mixing chamber of the first container, thereby allowing the contents of the mixing chamber to be easily obtained from the mixing apparatus through the third port 180. The operation of the mixing apparatus is described with reference to Figure 3A below.

The third port thus functions as a dispenser to dispense frothed milk from the mixing apparatus. Thus, the combination of the coffee maker and the milk frothing unit defines a dispenser having a nozzle 14 for dispensing liquid coffee from the coffee machine (which is more generally a liquid coffee extraction apparatus) and having the third port for dispensing frothed milk from the mixing apparatus. They both dispense to a coffee cup.

Figure 3A shows a detailed view 200 of the channel arrangement 140 of the mixing apparatus of Figure 2A.

The channel arrangement 140 may be divided into several portions according to the operation performed by each portion. In operation, milk may be provided to the first container 110 and steam may be provided to the first seal port 170. As steam enters the channel arrangement, milk is drawn from the first container into a milk passage 210 (which is a first channel portion) by way of the first port 150. The steam enters a second channel portion 220.

It then passes through a steam separator 221 and then travels through a third channel portion 230 and into the mixing chamber 160, the flow of steam generating a negative pressure in the milk passage 210, thereby drawing the milk along the milk passage.

Figure 3B shows a simple illustration of the intersection of the three channel portions, and shows one example of steam separator in more detail.

The steam separator 221 comprises an in-line fluid passageway comprising a tortuous path 222 for the steam, with blocking elements 223 for blocking a direct path and for directing moisture to a reservoir 224. The reservoir collects moisture so that the steam which passes further along the channel arrangement has been dried.

The milk is drawn along the milk passage 210 due to the negative pressure generated by the steam 225 flowing from the second channel portion 220 to the third channel portion 230. When it meets an intersection of channel portions, the flow of the dried steam draws the milk and steam into the third channel portion 230 which terminates at an end 235 which opens into the mixing chamber 160. The third channel portion 230 maybe adapted to impart a Venturi effect on the milk and steam as they pass through the third channel portion. In particular, the channel widths are reduced as the milk and steam enter the third channel portion 230, thereby imparting the Venturi effect (i.e. a reduced pressure)_on the milk and steam flows, which is used to draw the milk along its channel, up the milk passage 210.

Air is drawn in at the end 235 of the third channel portion 230 by suction due to the flow speed, so that there is a milk, steam and air mixture entering the mixing chamber. Due to the suction, the arrangement doesn't leak. The air introduced provides bubbles for the desired frothing. The aim of the mixing chamber is to release large bubbles and retain only small air bubbles in the mixture. The air, milk and steam mixture forms the fluid that enters the mixing chamber.

The Venturi effect may be achieved by simply restricting the cross sectional area of the third channel portion 230 relative to the first channel portion (the milk passage 210) and the second channel portion 220. The increase in speed of the milk and steam as they enter the third channel portion in combination with the drawing in of air defines the frothing performance of the mixing apparatus, and the pressure differential prevents the milk and steam from flowing down the incorrect channels.

The milk passage 210 is typically vertical in use and extends up from the (milk entry) first port 150. At the top it meets the outlet from the steam separator to one side which has the steam entry port at its inlet end, and it meets the third channel portion 230 to the other side, which has the mixing chamber at its remote end. The channel arrangement 140 thus generally has a T-shape, and the seal 130 has a corresponding T-shape.

The seal is for example an integral part of the second container. It may alternatively be a removable seal, in which case it may be a press fit into a side wall of the second container 120. In some instances, the seal 130 comprises a first sealing member 240 comprising transition portion 250. These will be described in more detail below.

Figure 3B shows one example of a possible steam separator, based simply on a static arrangement of flow directing and flow blocking members.

However, other designs of steam separator are possible.

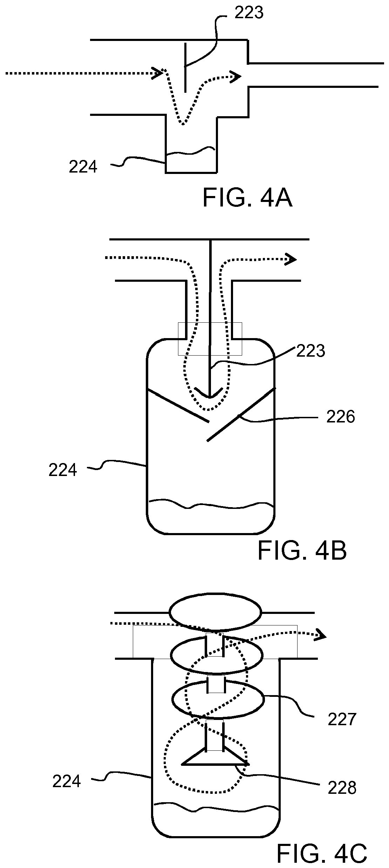

Figure 4 shows three variations to the design of steam separator.

Figure 4A shows a modification to Figure 3B with a single blocking element 223, with the reservoir 224 directly beneath.

Figure 4B shows that the reservoir can be much larger, with the blocking element 223 extending vertically into the top of the reservoir and with further baffles within the reservoir against which the flow is directed vertically (rather than horizontally as in Figure 3B).

More complicated designs may also impart a spin to the steam so that the water droplets are thrown outwardly by centrifugal forces. For example, Figure 4C shows a design in which the blocking element is replaced with a double helix baffle 227 for causing a spiral flow into and out of the separator. The flow undergoes a 180 degree flow direction reversal to enhance separation efficiency. A deflector baffle 228 prevents re-entrainment of the separated droplets collected in the reservoir.

Thus, it will be seen that many different designs of steam separator are possible.

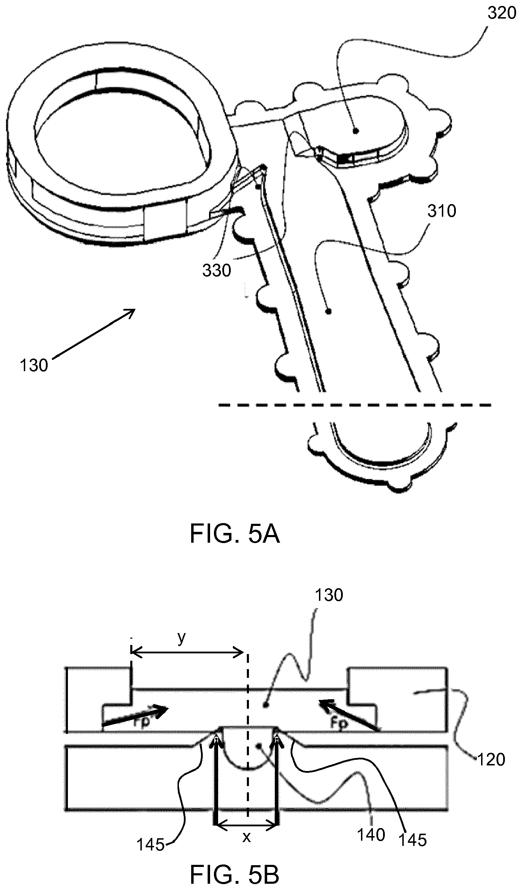

Figure 5A shows the seal 130 of Figure 3A in more detail.

It is clear from the above passage relating to Figure 3A that the various channel portions undergo a variety of different conditions when the mixing apparatus 100 is in operation. Thus, as each seal area has their own specification, the seal, in this case a span seal, can be optimised for each area without risk of leakage in the transition areas.

There are three parameters that may be adjusted to tune the sealing force of the span seal. The three parameters are: the shore hardness of the seal; the span width of the seal, which increases the sealing force but may also introduce some deformation to the channel; and the thickness of the seal. As the various areas of the span seal may be tuned using the span width and seal thickness, the risk of leakage is largely reduced as the need for transitions between different seals is eliminated.

For example, the seal may comprise a first sealing portion 310 for sealing the milk passage 210 of the channel. Thus, the first sealing portion should be adapted to withstand the negative pressure present in the milk passage. As this pressure is typically low, for example, around -0.15bar, the required sealing force is low; however, the milk passage may be relatively long, for example 200mm, meaning that the required sealing force increases. As the milk is low temperature at this stage and the dimensions of the milk passage are not critical to the milk frothing process, the sealing force of the first sealing portion may be increased by simply increasing the span width.

As a further example, the seal may comprise a second sealing portion 320 for sealing the second channel portion 220 of the channel and forming a closure to the steam separator. In this case, the second sealing portion must withstand both the high pressure, for example 1 Bar, and the high temperature, for example 105°, of the steam entering the channel. As with the milk passage, the geometry of the second channel portion is not critical to the milk frothing process meaning that the span width of the second sealing portion may be increased to increase the sealing force and the seal thickness may be increased to increase both the sealing force of the second sealing portion and the resistance of the second sealing portion to the high temperature of the steam.

As a final example, the seal may comprise a third sealing portion 330 for sealing the third channel portion 230 of the channel arrangement. The dimensions of the third channel portion are critical to the performance of the milk frothing process and the tolerance for deformation is low, for example ± 0.1mm. Therefore, the span width of the third sealing portion may not be freely increased and seal thickness delivers only marginal benefit to the sealing force itself. In this case, the shore hardness of the seal provides the required sealing force. The shore hardness of the seal may constant, for example 45 shore, throughout the seal in order to prevent excessive span widths and seal thicknesses in the first and second sealing portions. In addition to the milk frothing process, the seal would be required to withstand daily cleaning, typically by way of a dishwasher. In this case, the shore hardness of the seal may help to extend the lifetime of the seal.

Finally, the seal has the first sealing member 240 which provides a radial seal around the mixing chamber. The three sealing portions are span seals whereas the first sealing member is a radial seal. A span seal cannot be used to seal the mixing chamber because an opening is needed. However, the three sealing portions and the first sealing member together form a single integrated component.

Figure 5B illustrates the operation of a span seal acting as the seal 130.

The span seal works on pull forces, Fp, which stretch the seal over the channel instead of compressing it. The span seal provides sealing directly onto the channels without a large amount of deformation. The channel 140 cross section dimension and shape is independent of the indentation and sealing force leading to a more stable milk forth performance, particularly in the third sealing portion 330. The indentation of the span seal may be, for example, 0.6mm. The span width, S, of a span seal is defined as:

$$S = y - \frac{x}{2},$$

where, y is distance from the centre of the channel to the edge of the span seal and x is the width of the channel.

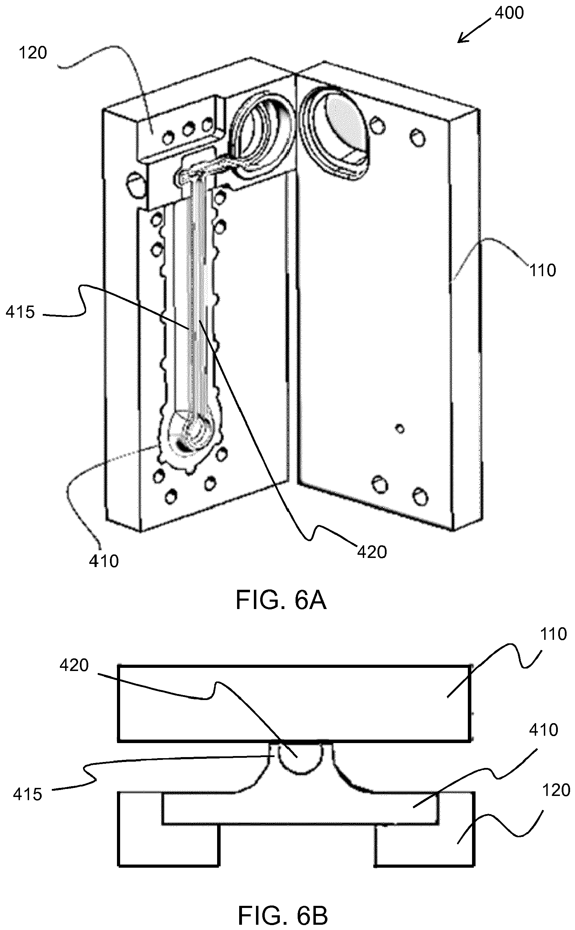

Figures 6A and 6B show a detailed view of an alternative channel arrangement 400.

In this case, the seal 410 comprises a raised seal portion 415, which define the channel arrangement 420 in combination with the first container 110. This arrangement simplifies the cleaning of the first container as there are fewer raised portions in which the ingredients may get stuck. In this case, the shore hardness of the seal would need to be further increased in order to ensure that the raised seal portion does not deform under high pressure, thereby causing leakage to occur.

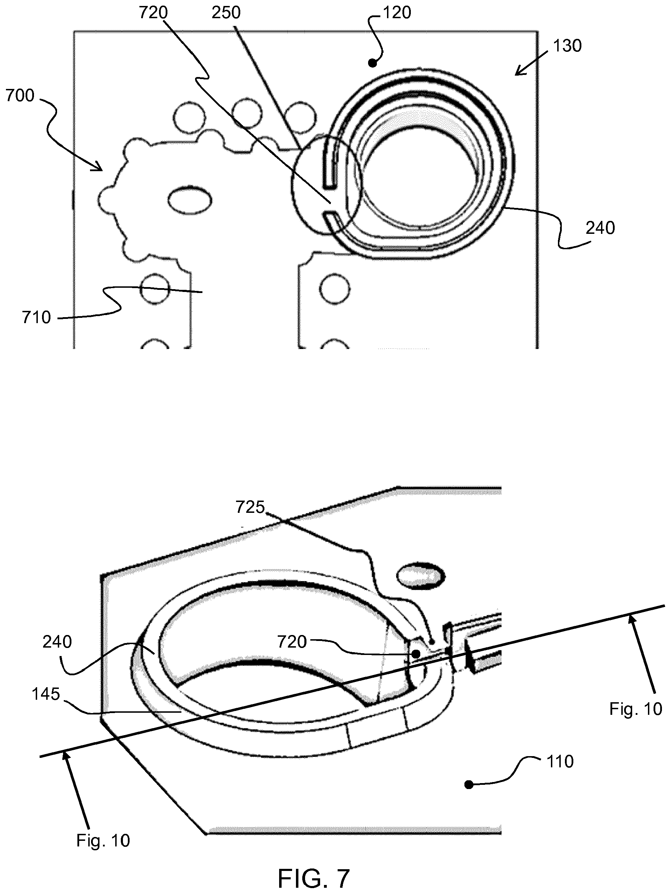

Figure 7 shows a seal 700 having a first sealing member 240, which in this case is a radial seal, and a transition portion 250 as previously illustrated in Figure 3A. A view from above is shown in the top image and a perspective view of the opposite container is shown in the bottom image.

The transition portion 250 comprises a seal split 720 to facilitate the movement of milk and steam from the channel defined by the other sealing portions 710 (equivalent to 310, 320 and 330 in Figure 4A), which in this case is the set of span seals as described above, into the mixing chamber. In this way, it is possible to integrate both the span seals and the radial seal into a single seal, thereby increasing the simplicity of the mixing apparatus for disassembly and cleaning.

Performing a straight combination of a radial and span seal will typically cause leakage in the transition area due to the seal split.

As seen more clearly in the bottom image, the channel arrangement 140 in this example is defined by raised portions 145 of the first container 110. The raised portions define the sides of the flow channels where span seals are to be applied. At the seal split there is a gap 725 in the side wall which allows external communication to the end 235 of the third channel portion 230 (as shown in Figure 3A). The gap 725 opens into the space between the first and second containers.

An air inlet is thus formed by the gap 725. This defined transition portion can be achieved through a controlled combination of the seal split and Venturi of the milk froth system. In this area no sealing is allowed, as ambient air must be sucked in. By providing the air inlet in line with the channel system at the transition portion of the seal, the sealing area is controlled as the air drawn in by the flow within the channel prevents uncontrolled leakage of milk.

The speed of the liquid (milk, steam and air) entering the mixing chamber is important for the foam quality. It is preferred that the air enters at the end 235 of the third channel portion 230. There is a minimum hole size such as formed by a 1.5mm gap. The distance between the milk venture and the air gap, and the distance between the air gap and the mixing chamber are the key parameters for defining the milk frothing characteristics.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

**Claims**

1. A mixing apparatus for creating frothed milk, comprising:

   a first container (110) for containing milk;
   a mixing chamber (160) for mixing milk, steam and air;
   a steam inlet channel (220) which leads to the mixing chamber;
   a milk passage (210) which leads from the first container to the mixing chamber; and
   a steam separator (211) in series along the steam inlet channel.

2. An apparatus as claimed in claim 1, further comprising an air passage which leads to the mixing chamber.

3. A mixing apparatus as claimed in claim 2, wherein the air passage comprises an air intake channel (725) which defines an air flow from the air surrounding the mixing apparatus to the mixing chamber.

4. A mixing apparatus as claimed in claim 3, wherein the air intake channel (725) imparts a Venturi effect on the air flow.

5. An apparatus as claimed in any one of claims 1 to 4, wherein the steam separator (221) comprises a reservoir (224) for collecting moisture.

6. An apparatus as claimed in claim 5, wherein the steam separator comprises an in-line fluid passageway comprising a tortuous path (222) for the steam, with at least one blocking element (223) for blocking a direct path and for directing moisture to the reservoir.

7. An apparatus as claimed in claim 5 or 6, wherein the first container (110) defines the mixing chamber (160) and wherein the apparatus further comprises: a second container (120), wherein the second container is adapted to receive the first container (110) and wherein the second container comprises a port (180) for connection to the mixing chamber (160) from which mixed milk, steam and air are delivered.

8. An apparatus as claimed in claim 7, wherein the steam inlet channel (220) and the milk passage (210) are defined by an interface between the first and second containers.

9. An apparatus as claimed in claim 7 or 8, wherein the reservoir (224) of the steam separator (221) is defined by an interface between the first and second containers.

10. An apparatus as claimed in claim 9, wherein the reservoir (224) of the steam separator has a volume of less than 10mL.

11. An apparatus as claimed in any one of claims 7 to 10, further comprising:
a seal (130) disposed between the first container (110) and the second container (120), wherein the seal comprises:

    a first sealing member (240) disposed between the mixing chamber (160) and the port (180); and
    a second sealing member for defining one surface of the milk passage and one surface of the reservoir.

12. An apparatus as claimed in claim 11, wherein the seal further comprises:
a transition seal portion (250), the transition seal portion comprising:

    a seal split (720); and
    an air intake channel (725).

13. A coffee maker, the coffee maker comprising;
a liquid coffee extraction apparatus;
the mixing apparatus as claimed in any one of claims 1 to 12; and
a dispenser adapted to dispense:

    liquid coffee from the liquid coffee extraction apparatus; and
    frothed milk from the mixing apparatus.

FIG. 1A

FIG. 1B

100

110

120

170

160

130

145

150

140

**FIG. 2A**

100

175

180

**FIG. 2B**

FIG. 3A

FIG. 3B

223

224

FIG. 4A

223

226

224

FIG. 4B

227

228

224

FIG. 4C

320

310

330

130

## FIG. 5A

130

y

Fp

Fp

120

145

x

140   145

## FIG. 5B

400

120

415

410

110

420

FIG. 6A

420

110

415

410

120

FIG. 6B

FIG. 7

Europäisches
Patentamt

European
Patent Office

Office européen
des brevets

# EUROPEAN SEARCH REPORT

Application Number

EP 19 17 2748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 842 407 A (SCHMED ARTHUR) 1 December 1998 (1998-12-01) * column 4, lines 19-33 * * column 5, lines 56-60 * * figures 2,3,4 * ----- | 1-6,13 | INV. A47J31/44 |
| X | DE 10 2004 062747 A1 (BSH BOSCH UND SIEMENS HAUSGERÄTE GMBH) 6 July 2006 (2006-07-06) * paragraph [0023]; figures 3,4,5 * ----- | 1-6,13 | |
| A | WO 2017/103709 A1 (CAFFITALY SYSTEM SPA) 22 June 2017 (2017-06-22) * figure 4 * ----- | 7,8,11 | |

TECHNICAL FIELDS
SEARCHED      (IPC)

A47J

The present search report has been drawn up for all claims

| Place of search | Date of completion of the search | Examiner |
|---|---|---|
| Munich | 12 June 2019 | Reichhardt, Otto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 17 2748

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2019

| Patent document cited in search report | Publication date | Patent family member(s) | | Publication date |
|---|---|---|---|---|
| US 5842407 A | 01-12-1998 | AT | 222072 T | 15-08-2002 |
| | | CA | 2200632 A1 | 25-09-1997 |
| | | CH | 690161 A5 | 31-05-2000 |
| | | CN | 1163737 A | 05-11-1997 |
| | | DE | 59707943 D1 | 19-09-2002 |
| | | DK | 0797945 T3 | 09-12-2002 |
| | | EP | 0797945 A1 | 01-10-1997 |
| | | ES | 2185891 T3 | 01-05-2003 |
| | | JP | H105136 A | 13-01-1998 |
| | | KR | 970064519 A | 13-10-1997 |
| | | PT | 797945 E | 31-01-2003 |
| | | US | 5842407 A | 01-12-1998 |
| DE 102004062747 A1 | 06-07-2006 | AT | 407606 T | 15-09-2008 |
| | | CN | 101090659 A | 19-12-2007 |
| | | DE | 102004062747 A1 | 06-07-2006 |
| | | EP | 1833340 A1 | 19-09-2007 |
| | | WO | 2006069838 A1 | 06-07-2006 |
| WO 2017103709 A1 | 22-06-2017 | AU | 2016372691 A1 | 31-05-2018 |
| | | BR | 112018010572 A2 | 21-11-2018 |
| | | CA | 3008207 A1 | 22-06-2017 |
| | | CN | 108366691 A | 03-08-2018 |
| | | CO | 2018006365 A2 | 10-07-2018 |
| | | EP | 3367855 A1 | 05-09-2018 |
| | | JP | 2018537234 A | 20-12-2018 |
| | | KR | 20180095548 A | 27-08-2018 |
| | | US | 2018353000 A1 | 13-12-2018 |
| | | WO | 2017103709 A1 | 22-06-2017 |

EPO FORM P0459

For more details about this annex : see Official Journal of the European Patent Office, No. 12/82